# EUROPEAN PATENT SPECIFICATION

(11) **EP 2 768 837 B1**
(45) Date of publication and mention of the grant of the patent: **07.12.2016**
(21) Application number: 12841304.4
(22) Date of filing: 15.10.2012
(51) Int. Cl.: C08K 5/00, C07F 9/6561, C08K 5/529, C09K 21/12

(54) **NOVEL TETRAOXASPIRO[5.5]UNDECANE BASED PHOSPHATE COMPOUNDS AND THEIR USE AS FLAME RETARDANTS**
NEUE AUF TETRAOXASPIRO-[5,5-]UNDEKAN BASIERENDE PHOSPHATVERBINDUNGEN UND IHRE VERWENDUNG ALS FEUERSCHUTZMITTEL
NOUVEAUX COMPOSÉS DE PHOSPHATE À BASE DE TÉTRAOXASPIRO[5.5]UNDÉCANE ET LEUR UTILISATION COMME IGNIFUGEANTS

(30) Priority: 21.10.2011 SE 11007846 T
(43) Date of publication of application: 27.08.2014
(73) Proprietor: PERSTORP AB, 284 80 Perstorp (SE)
(72) Inventor: JAMES, David, 281 33 Hässleholm (SE); MUNSLOW, Ian, 267 34 Bjuv (SE)
(74) Representative: Hoffmann Eitle
(86) International application number: PCT/SE2012/000157
(87) International publication number: WO 2013/058690

(56) References cited:
- EP-A1- 1 277 758
- WO-A1-96/13508
- WO-A2-2006/036880
- GB-A- 908 732
- GB-A- 920 171
- JP-A- S58 152 029
- KR-B1- 100 720 873

## Description

The present invention refers to a novel phosphate compound, more specifically to a novel tetraoxaspiro[5.5]undecane based phosphate compound and a process for production of said novel compound by means of phosphorylation. The present invention furthermore refers to the use of the novel phosphate compound as component in intumescent and fire retarding compositions, such as polymeric compositions.

During the last decades health concerns regarding safety of currently used plastic material additives has arisen. Many additives have been banned and many others are on the verge of being phased out resulting in a need for new and safer chemicals. Additives, such as plasticisers, antistatic materials, blowing agents, spumific agents and flame retardants are commonly added to polymeric materials to change and/or tailor material properties.

Flame retardant, fire preventing and heat resistant compounds are commonly added to thermoplastic and thermosetting materials, textiles and coatings to resist or inhibit the start or spread of fire. There is a great variety of such compounds available on the market, of which organophosphates are one of the most commonly used group. Examples of commercially available flame retardants include *tert*-butylphenyl diphenyl phosphate, cresyl diphenyl phosphate, tricresyl phosphate, trixylenyl phosphate and phenyl phosphorodiamidate. Many commercially available flame retardants are based on the molecule bisphenol A, such as bisphenol A *bis*(diphenyl phosphate), which is decomposed into the molecule bisphenol A. Bisphenol A decomposes slowly into smaller fragments and leads to accumulation in humans, animals and the environment. Bisphenol A is, although for many decades known to be an oestrogenic, still used as a flame retardant in polymeric compositions due to a lack of safer alternatives. A widely used bisphenol A based flame retardant is said bisphenol A *bis*(diphenyl phosphate) (BPADP), which decomposition products are triphenyl phosphate, phenol, bisphenol A and diphenyl phosphate, of which decomposition products bisphenol A is the most health hazardous to humans. Bisphenol A is known to be an endocrine disrupter associated with irritation to the respiratory system, risks of serious damage to the eyes and the neural system, risk of sensitization by skin contact and risk of impaired fertility. Contact with skin should thus be avoided. The health risks of these flame retardants are especially alarming since they are found in everyday household items, such as cables, computers, kitchen appliances, television sets and food cans. This means that contact cannot be avoided.

The search for safer and/or more effective flame retardant, fire preventing and heat resistant compounds for use in various materials has lead to the development of a large number of compounds and compositions. Various phosphorous containing compounds, useful as fire preventers, flame retardants and/or heat stabilisers include for instance phosphorous containing crosslinked resins derived from 3,9-divinylspirobi(*m*-dioxane) as disclosed in GB 908,732, GB 920,171 and GB 914,025. These resins are in GB 908,732 exemplified by a first embodiment teaching reaction between pentaerythritol and acroleine which under disclosed parameters yields a mixture of diallylidene-pentaerythritol oligomers, followed by Michael addition, to the vinyl double bonds, of "condensed" phosphoric acid and a subsequent cationic crosslinking of obtained reaction mixture to a crosslinked resin, and by a second embodiment comprising the reaction between glycerol, 3,9-divinylspirobi(*m*-dioxane) and "condensed" phosphoric acid, which reaction yields a mixture of polymers which subsequently are cationically crosslinked to a crosslinked resin. In GB 920,171 said resins are exemplified by products, similar to said second embodiment of GB 908,732 but wherein glycerol is replaced by a phenolic triol. GB 914,024 teaches a process for preparing flame resistant resins derived from 3,9-divinylspirobi(*m*-dioxane). A phenol and a phosphorous acid ester yield resins analogous to those of GB 920,171. Further state of the art phosphorous compounds include phosphate esters of resorcinole-ketone resins as disclosed in WO 2006/036880 and aromatic phosphate esters of the type hydrocarbyl *bis*(hydrocarbyl phosphate) as disclosed in WO 96/13508. EP 1 277 758 teaches highly complex compounds comprising cycloalkane, cycloalkene, cycloalkenyl and/or aromatic structures, such as (1-oxa-2,6,7-trioxa-1-phospha-bicyclo[2.2.]oct-4yl)methyl-andamantane carbonate and 3,3-dimethyl-5-(diphenylphosphoroxi-methyl)cyclohexyl phosphate, said to be useful as for instance flame retardants. EP 0 516 006 discloses 4,4'-biphenylenediphosphonite compounds, such as tetrakis(2,4-di-tert-butyl-5--methylphenyl)-4,4'-biphenylenephosphonite, which compounds are said to be heat resistant and resistant to oxidative degradation. Yet further phosphorous compounds and compositions claimed to be useful as fire preventers, flame retardants and/or heat stabilisers are disclosed in WO 96/013508 and EP 0 509 506. WO 96/013508 teaches a process comprising the reaction of a composition consisting essentially of a halophosphate and an alkylene-arylene bridging group containing diol to yield a hydrocarbyl *bis*(dihydrocarbyl phosphate). EP 0 509 506 discloses aromatic diphosphates of formula 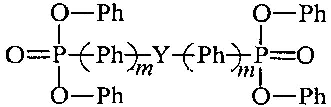 wherein each Ph group is a phenyl group. These aromatic diphosphates are said to be suitable for use in thermoplastic and thermosetting resins as flame retardants, antioxidants or plasticisers.

We hereby declare the invention of a novel and previously not disclosed and thus not previously characterised and/or utilised tetraoxaspiro[5.5]undecane based phosphate having the general formula of below Formula (I) 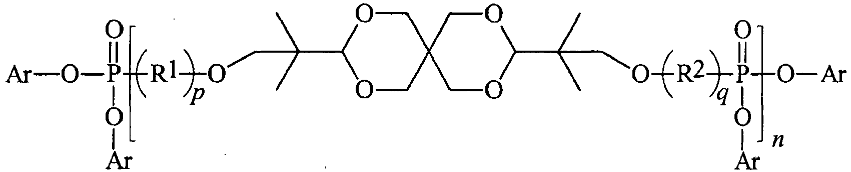 wherein
- *n* is an integer and at least 1, such as an integer between 1 and 6, between 1 and 5 or between 1 and 4,
- *p* and *q* individually, that is *p* and *q* can be identical or different, is 0 or an integer between 1 and 10, such as an integer between 1 and 8, between 1 and 6 or between 1 and 4,
- R¹ and R² individually, that is R¹ and R² can be identical or different, (i) is a linear or branched C₁-C₆, such as a linear or branched C₁-C₄, divalent alkyl group, which alkyl group optionally is substituted by an aromatic ring, such as a monovalent phenyl group, or (ii) a group of formula -R³-O- wherein R³ is a C₁-C₆, such as a C₁-C₄, divalent alkyl group, such a methyl, ethyl, propyl or butyl group, and wherein
- Ar is an aromatic ring, optionally substituted by at least one linear or branched C₁-C₆, such as a C₁-C₄, alkyl group, for instance unsubstituted or substituted phenyl.

Said novel phosphate is suitable as a less or even nonhazardous substitute for compounds such as said bisphenol A phosphates as fire preventing and/or flame retardant additive in for instance polymeric materials. Said novel tetraoxaspiro[5.5]undecane based phosphate can be produced in form of monomers, dimers, oligomers, or even polymers, or mixtures thereof with repetitive units comprising a tetraoxaspiro[5.5]undecane group and a phosphate group. The term dimer/dimeric is herein and hereafter defined as a compound comprising two monomer units, oligomer/oligomeric as a compound comprising three to five monomer units and polymer/polymeric as a compound comprising more than five monomer units. The novel phosphate compound according to the invention has advantageous properties, such a low migration, low volatility and reduced plasticising effect, over known in the art flame retardants. The novel phosphate compound according to the invention is furthermore colourless, able to improve the melt flow of a host resin and has outstanding thermal stability, low migration (leaching) tendency and a low volatility.

In the most preferred embodiment of the present invention, *p* and *q* are 0, whereby this embodiment of the novel phosphate compound according to the present invention can be disclosed by below Formula (II) 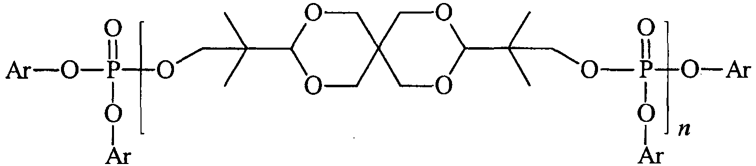 wherein
- *n* is, as previously disclosed, an integer and at least 1, such as an integer between 1 and 6, between 1 and 5 or between 1 and 4, and wherein
- Ar, also as previously disclosed, is an aromatic ring, optionally substituted by at least one linear or branched C₁-C₆, such as a C₁-C₄, alkyl group, for instance unsubstituted or substituted phenyl.

The most preferred novel tetraoxaspiro[5.5]undecane based phosphate is 2,4,8,10-tetraoxaspiro[5.5]-undecane-3,9-diyl *bis*(2-methylolpropane)-2,1-diyl tetraphenyl *bis*(phosphate) and dimers, oligomers and polymers thereof.

In a further aspect, the present invention refers a process for the synthesis of said novel tetraoxaspiro[5.5]undecane based phosphate. Said process is a phosphorylation reaction wherein said novel tetraoxaspiro[5.5]undecane based phosphate is obtained by subjecting a raw material composition comprising at least one aryl halophosphate, such as a diaryl halophosphate or an aryl dihalophosphate, or at least one alkyl substituted, for instance a linear or branched C₁-C₁₀ alkyl, such as a methyl, ethyl, propyl or butyl, substituted species thereof, and a spiroglycol of below Formula (III) 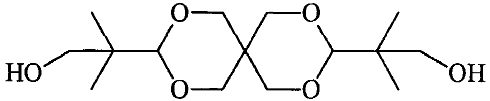 or an alkoxylated, such as a methoxylated, ethoxylated, propoxylated and/or butoxylated, species thereof, comprising for instance 1-10, such as 1-8, 1-6 or 1-4 alkoxy units, to a phosphorylation reaction. Said aryl halophosphate is in preferred embodiments, however not limited to, diphenyl chlorophosphate, diphenyl bromophosphate, diphenyl iodophosphate, diphenyl fluorophoshate, phenyl dichlorophosphate, phenyl dibromophosphate, phenyl diiodophosphate and/or phenyl difluorophosphate and/or an alkyl substituted species thereof. Said spiroglycol is in the most preferred embodiments of the present invention a 2,4,8,10-tetraoxaspiro[5.5]undecane-3,9-dialkanol, such as a pentaerythritol spiroglycol for instance 2,4,8,10-tetraoxaspiro[5.5]undecane-3,9-diethanol (an alternative chemical name is 3,9-*bis*(1,1-dimethyl-2-hydroxyethyl)-2,4,8,10-tetraoxaspiro[5.5]undecane), or an alkoxylated, such as a methoxylated, ethoxylated, propoxylated and/or butoxylated species thereof.

The compound according to the present invention can be prepared as monomeric, dimeric, oligomeric or even polymeric structures at a yield of at least 75%, such as at least 80% and even at least 90%. The phosphorylation reaction is preferably carried out at a temperature of 80-120°C, such as 90-110°C or 95-105°C, and advantageously in presence of a catalytic material, such as a metal halide, and/or a solvent. Examples of suitable metal halides include, but are not limited to, magnesium chloride, aluminium chloride, zinc chloride, titanium tetrachloride, iron chloride, copper chloride and magnesium bromide and suitable solvents are found among for instance toluene, hexane, heptane and mixtures thereof.

In the most preferred embodiments of the present process, monomeric, dimeric, oligomeric or even polymeric products, including mixtures thereof, are yielded by subjecting a raw material composition comprising a pentaerythritol spiroglycol, such as 2,4,8,10-tetraoxaspiro[5.5]-undecane-3,9-diethanol, or an alkoxylated species thereof, and at least one diphenyl halophosphate or phenyl dihalophosphate and/or at least one alkyl substituted diphenyl halophosphate or phenyl dihalophosphate to a phoshorylation reaction under said conditions.

The novel phosphate compound of the present invention is advantageously used in polymeric compositions, especially in thermoplastic compositions, as a flame retardant in for instance a concentration of 5-30%, such as 10-20% or 10-15%, by weight of the composition. Said novel phosphate compound can of course be used in combination with any additive or modifier known in the art of polymeric materials. Such additives and modifiers can be exemplified by for instance plasticisers, impact modifiers, viscosity modifiers, antioxidants, flow control agents, UV stabilisers, pigments, mould release agents, colorants, fillers, fibrous reinforcement materials, substances increasing the temperature dimensional stability such as zeolite, silica and talc, substances reducing after-flame time such as organoclays, and substances increasing the stability of the polymeric material such as the acid scavengers, epoxies and oxetanes.

The novel phosphate compound of the present invention can also advantageously be combined with a synergist composition, wherein the synergist composition comprises an intumescent agent facilitating char formation and suppresses smoke formation during burning of the composition. Synergist compositions can suitably comprise, but not limited to, antimony trioxide, zeolite, zinc borate, zinc hydroxystannate, mica, polysiloxanes, such as dimethyl polysiloxane, methylphenyl polysiloxane, diphenyl polysiloxane, intercalated graphite, hindered amine light stabilisers, polyols, such as pentaerythritol, di-pentaerythritol and its oligomers and polymers, and epoxy novolacs including any combination thereof. The synergist composition is preferably present in an amount of between 0.1 and about 10% by weight, typically between 0.5 and 5% by weight. The novel phosphate can also be used in formulations comprising other flame retardants such as mineral flame retardants, for instance aluminium trihydroxide and magnesium hydroxide, and other phosphorus based and halogenated flame retardants. Further additives such as anti-dripping additives, for instance fluoropolymers such as tetraflouroethylene, can be helpful for further formulation optimisation.

The novel phosphate compound of the present invention can furthermore advantageously be used as a component of an intumescent and/or flame retardant composition, wherein the intumescent and/or flame retardant composition comprises any intumescent and/or flame retardant agent known in the art, for instance ammonium polyphosphates, phosphinates and phosphonates and melamine compounds, such as melamine cyanurate and melamine polyphosphates, as well as phosphate based flame retardants, such as resorcinol *bis*(diphenyl phosphate), bisphenol A *bis*(diphenyl phosphate), N,N'-*bis*[di-(2,6-xylyl)phosphoryl] -piperazine, including mixtures thereof. Examples of suitable carbon sources in intumescent compositions include di, tri and polyols, such as neopentyl glycol, 2-methyl-1,3-propanediol, 2-butyl-2-ethyl-1,3-propanediol, glycerol, trimethylolethane, trimethylolpropane, trimethylolbutane, di-trimethylolethane, di-trimethylolpropane, di-trimethylolbutane, pentaerythritol and di-pentaeryhtritol.

The novel phosphate compound according to the invention can yet further advantageously be used as a component of fire retardant and/or intumescent composition based on thermoplastics, such as a polycarbonate, an acrylonitrile butadiene styrene (ABS), a polystyren, a polyphenylene oxide, an epoxy resin, a poly(vinyl chloride), a poly(vinylidene chloride), a polytetrafluoroalkylene such as a polytetrafluoroethylene, a polyacetylene, a polyester, a poly(alkylene carboxylate) such as a poly(ethylene terephthalate), a polyalkylene such a polyethylene or a polypropylene, a polyamide and/or a polyurethane in a concentration of for instance 5-30%, such a 10-20% or 10-15%, by weight of said polymeric composition.

The novel phosphate compound according to the present invention can be used for fire protecting purposes in for example buildings, furniture, electrical and electronic apparatus, such as television sets, computer and telephone equipment, household appliances, cables, textiles, sea and land based vehicles, interior decoration, furniture, mattresses and bedding, organic materials such as wood and composite materials, and food containers.

The present invention is further disclosed in enclosed embodiment examples, which are to be construed as illustrative and not limiting in any way. In the following, Examples 1-3 illustrate syntheses of phosphates according to embodiments of the present invention. Examples 4 and 5 relate to the flame resistance in polymeric compositions of the phosphate yielded in Example 1. Results from analyses are given in attached Tables 1-4.

### Example 1

150 parts by weight of pentaerythritol spiroglycol (2,4,8,10-tetraoxaspiro[5.5]undecane--3,9-diethanol), 0.5 part by weight of magnesium chloride and 130 parts by weight of toluene, as solvent, were charged in a reaction vessel equipped with a thermocouple, condenser and gas inlet and outlet. The temperature was slowly raised to 100°C while 271 parts by weight of diphenyl chlorophosphate under stirring drop-wise was added during ca. 5 minutes. Nitrogen was purged through the solution to remove formed HCl with the gas outlet connected to a water scrubber. The reaction was, when the reaction temperature had reached 100°C, continued for 5 hours. The reaction product was subsequently cooled to room temperature and neutralised with 1.0 M NaOH followed by washing with water. The organic layer was separated and toluene was removed in vacuo. The toluene content was reduced to < 0.1% by placing the product in an oven at 100°C for 48 hrs..

Yielded reaction product, a clear oily liquid, was analysed by gel permeation chromatography (GPC) evidencing that yielded reaction product was a mixture of 2,4,8,10-tetraoxaspiro[5.5]undecane-3,9-diyl *bis*(2-methylolpropane)-2,1-diyl tetraphenyl *bis*(phosphate) - pentaerythritol spiroglycol *bis*(diphenyl phosphate) - and its dimer (corresponding to Formula II wherein n is 1 and 2, respectively), in a yield of 87% by weight. The result from GPC analyses is given in Table 1.

### Example 2

153 parts by weight of pentaerythritol spiroglycol (2,4,8,10-tetraoxaspiro[5.5]undecane--3,9-diethanol), 0.5 parts by weight of magnesium chloride and 150 parts by weight of toluene, as solvent, were charged in a reaction vessel fitted with a thermocouple, condenser and gas-inlet. Heating was started (set-point 100°C) and 272 parts by weight of diphenyl chlorophosphate was under stirring added drop-wise over about 5 minutes. A nitrogen spurge was used to remove formed HCl, via the gas inlet, with the outlet connected to a water scrubber. Once the reaction had reached 100°C, heating and stirring was continued for a further 5 hrs. After 5 hrs the reaction mixture was cooled to room temperature and neutralised with 1.0 M NaOH and subsequently washed with water. The organic layer was separated and the toluene was removed in vacuo. The toluene content was reduced to < 0.1% by placing the product in an oven at 100°C for 48 hrs.

Yielded reaction product, a clear oily liquid, was analysed by gel permeation chromatography (GPC) evidencing that resulting reaction product was 2,4,8,10-tetraoxaspiro[5.5]-undecane-3,9-diyl *bis*(2-methylolpropane)-2,1-diyl tetraphenyl *bis*(phosphate) - pentaerythritol spiroglycol *bis*(diphenyl phosphate) - corresponding to Formula II wherein n is 1 in a yield of 87% by weight. The result from GPC analyses is given in Table 2.

### Example 3

380 parts by weight of pentaerythritol spiroglycol (2,4,8,10-tetraoxaspiro[5.5]undecane--3,9-diethanol), 0.5 parts by weight of magnesium chloride and 800 parts by weight of toluene, as solvent, were charged in a reaction vessel fitted with a thermocouple, condenser and gas-inlet. Heating was started (set-point 120°C) and 54 parts by weight of diphenyl chlorophosphate and 50 parts by weight of phenyl dichlorophosphate were added drop-wise over about 15 min. with stirring. A nitrogen spurge was used to remove formed HCl, via the gas inlet, with the outlet connected to a water scrubber. Once the reaction had reached 120°C, heating and stirring was continued for a further 5 hrs. After 5 hrs the reaction was cooled to room temperature and neutralised with 1.0 M NaOH and subsequently washed with water. The organic layer was separated and the toluene was removed in vacuo. The toluene content was reduced to < 0.1% by placing the product in an oven at 100°C for 24 hrs.

Yielded reaction product, a clear oily liquid, was analysed by gel permeation chromatography (GPC) evidencing that resulting reaction product was 2,4,8,10-tetraoxa-spiro[5.5]undecane-3,9-diyl *bis*(2-methylolpropane)-2,1-diyl tetraphenyl *bis*(phosphate) - pentaerythritol spiroglycol *bis*(diphenyl phosphate) - and its dimer and oligomers corresponding to Formula II wherein n is 1-5 in a yield of 95% by weight with the distribution 68% monomer, 22% dimer, 7% trimer and 3% tetramer/pentamer. The result from GPC analyses is given in Table 3.

### Example 4

Compositions were prepared from following materials:
- Polycarbonate (PC) / acrylonitrile butadiene styrene (ABS) - Xantar^{®} C CM206, Mitsubishi Engineering-Plastics Co,
- Bisphenol A *bis*(diphenyl phosphate) (BPADP) - NcendX^{®} P30, Albermarle Corporation, and
- Product yielded in Example 1 (PSGDP),
in the following amounts (% by weight):

| | Reference Sample | Sample 1 Comparative | Sample 2 Comparative | Sample 3 Embodiment | Sample 4 Embodiment |
|---|---|---|---|---|---|
| PC/ABS | 100 | 90 | 85 | 90 | 85 |
| BPADP | | 10 | 15 | | |
| PSGDP | | | | 10 | 15 |

The compositions were prepared using twin screw microextrusion (DSM Xplore^{®}) at 265°C. Sheets were prepared by thermoforming (Lescuyer^{®} PH40) at 275°C and all prepared samples were homogenous and glossy having a dry surfaces without discoloration after preparation.

### Example 5

Flame resistance properties were evaluated as follows:
- According to Flammability Standard UL94 using 12.5 x 13 x 3 mm specimens, reporting fulfilled requirements,
- after flaming time (t1 + t2), and
- cone calorimetry under 35 kW/m² at 25 mm from the radiant using 10 x 10 x 3 mm specimens.

The result of said evaluations is given in Table 4.

**Table 1**

| Result from GPC analyses of product yielded in Example 1. | | | |
|---|---|---|---|
| **Peak no.** | **Molecular weight (Mn) GPC g/mol** | **Molecular weight (Mw) Calculated g/mol** | **Product** |
| 1 | 1267 | 1211 | Dimer |
| 2 | 766 | 769 | Monomer |

**Table 2**

| Result from GPC analyses of product yielded in Example 2. | |
|---|---|
| Molecular weight, Mn, g/mol | 700 |
| Molecular weight, Mw, g/mol | 800 |
| Peak molecular weight, g/mol | 800 |
| Polydisperity | 1.0 |

**Table 3**

| Result from GPC analyses of product yielded in Example 3. | | | | |
|---|---|---|---|---|
| **Peak no.** | **Molecular weight (Mn) GPC g/mol** | **Molecular weight (Mw) GPC g/mol** | **Product** | **Molecular weight (Mw) Calculated g/mol** |
| 1 | 734 | 740 | Monomer | 769 |
| 2 | 1229 | 1201 | Dimer | 1211 |
| 3 | 1811 | 1641 | Trimer | 1654 |
| 4 | 2566 | 2393 | Tetramer/pentamer | 2096/2538 |

**Table 4**

| Flame resistance properties recorded in Example 5. | | | | | |
|---|---|---|---|---|---|
| | **Reference Sample** | **Sample 1 Comp.** | **Sample 2 Comp.** | **Sample 3 Embod.** | **Sample 4 Embod.** |
| Fulfills UL94 requirements | NC | V-2 | V-2 | V-2 | V-2 |
| After flaming time (t1 + t2), secs | - | 25 | 10 | <5 | <5 |
| Total Heat Release Rate, kW/m² | 69.5 | 54.0 | 58.3 | 52.2 | 55.7 |

## Claims

1. A novel phosphate compound
**characterised in, that** said phosphate compound has a general formula of Formula (I) 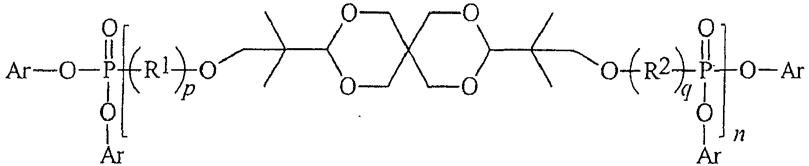 wherein
- *n* is an integer and at least 1,
- *p* and *q* individually is 0 or an integer between 1 and 10,
- R¹ and R² individually is (i) a linear or branched C₁-C₆ divalent alkyl group, optionally substituted by an aromatic ring, or (ii) a group of formula -R³-O- wherein R³ is a C₁-C₆ divalent alkyl group, and
- Ar is an aromatic ring, optionally substituted by at least one linear or branched C₁-C₆ alkyl group.

2. A phosphate compound according claim 1
**characterised in, that** R¹ and R² individually is a group of formula -R³-O-wherein R³ is a methyl, ethyl, propyl or butyl group.

3. A phosphate compound according to claim 1
**characterised in, that** *p* is 0 and *q* is 0.

4. A phosphate compound according to claim 3
**characterised in, that** said phosphate compound has a general formula of Formula (II) 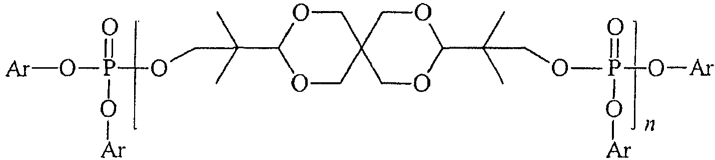 wherein
- *n* is an integer and at least 1, and
- Ar is an aromatic ring, optionally substituted by at least one linear or branched C₁-C₆ alkyl group.

5. A phosphate compound according to any of the claims 1-4
**characterised** i n, that *n* is an integer between 1 and 6.

6. A phosphate compound according to any of the claims 1-5
**characterised in, that** Ar is phenyl or C₁-C₄ alkyl substituted phenyl.

7. A phosphate compound according to any of the claims 1-6
**characterised in, that** said phosphate compound is 2,4,8,10-tetraoxaspiro[5.5]-undecane-3,9-diyl *bis*(2-methylolpropane)-2,1-diyl tetraphenyl *bis*(phosphate) or is a dimer or an oligomer thereof.

8. A process for production of a phosphate compound according to any of the claims 1-7
**characterised in, that** said phosphate compound is obtained by subjecting a raw material composition comprising at least one aryl halophosphate or at least one C₁-C₁₀ alkyl substituted aryl halophosphate and at least one 2,4,8,10-tetraoxaspiro[5.5]-undecane-3,9-dialkanol or at least one alkoxylated 2,4,8,10-tetraoxaspiro[5.5]-undecane--3,9-dialkanol to a phosphorylation reaction.

9. A process according to claim 8
**characterised in, that** said aryl halophosphate is diphenyl chlorophosphate, diphenyl bromophosphate, diphenyl iodophosphate, diphenyl fluorophoshate, phenyl dichlorophosphate, phenyl dibromophosphate, phenyl diiodophosphate and/or phenyl difluorophosphate and/or a C₁-C₁₀ alkyl substituted species thereof.

10. A process according to claim 8 or 9
**characterised in, that** said 2,4,8,10-tetraoxaspiro[5,5]undecane-3,9-dialkanol is 2,4,8,10-tetraoxaspiro[5.5]undecane-3,9-diethanol.

11. A process according to any of the claims 8-10
**characterised** i n, that said phosphorylation reaction is performed at a temperature of 80-120°C.

12. A process according to any of the claims 8-11
**characterised i n,** that said phosphorylation reaction is performed in presence of a catalytic material and optionally a solvent.

13. A process according to claim 12
**characterised in, that** said catalytic material is a metal halide selected from the group consisting of magnesium chloride, aluminium chloride, zinc chloride, titanium tetrachloride, iron chloride, copper chloride and/or magnesium bromide.

14. A process according to claim 12
**characterised in, that** said optional solvent is toluene, hexane, heptane or a mixture thereof.

15. A process according to any of the claims 8-14
**characterised i n,** that said process yields 2,4,8,10-tetraoxaspiro[5.5]-undecane-3,9-diyl bis(2-methylolpropane)-2,1-diyl tetraphenyl *bis*(phosphate) and/or a dimer and/or an oligomer thereof.

16. Use of a phosphate compound according to any of the claims 1-7, as flame retardant in a polymeric composition.

17. Use according to claim 16, wherein said phosphate compound is present in said polymeric composition in an amount of 5-30% by weight.

## Patentansprüche

1. Neue Phosphatverbindung, **dadurch gekennzeichnet, dass** die Phosphatverbindung die allgemeine Formel (I) aufweist: 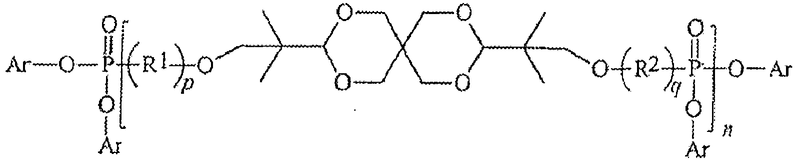 worin:
n eine ganze Zahl und mindestens 1 ist,
p und q individuell 0 oder eine ganze Zahl zwischen 1 und 10 sind,
R¹ und R² individuell (i) eine geradkettige oder verzweigte, divalente C₁₋₆-Alkylgruppe, gegebenenfalls substituiert mit einem aromatischen Ring, oder (ii) eine Gruppe der Formel -R³-O- sind, worin R³ eine divalente C₁₋₆-Alkylgruppe ist, und
Ar ein aromatischer Ring, gegebenenfalls substituiert mit zumindest einer geradkettigen oder verzweigten C₁₋₆-Alkylgruppe, ist.

2. Phosphatverbindung gemäss Anspruch 1, **dadurch gekennzeichnet, dass** R¹ und R² individuell eine Gruppe der Formel -R³-O- sind, worin R³ eine Methyl-, Ethyl-, Propyl- oder Butylgruppe ist.

3. Phosphatverbindung gemäss Anspruch 1, **dadurch gekennzeichnet, dass** p 0 ist und q 0 ist.

4. Phosphatverbindung gemäss Anspruch 3, **dadurch gekennzeichnet, dass** die Phosphatverbindung die allgemeine Formel (II) aufweist: 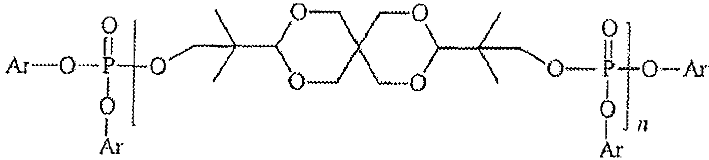 worin:
n eine ganze Zahl und mindestens 1 ist, und
Ar ein aromatischer Ring, gegebenenfalls substituiert mit zumindest einer geradkettigen oder verzweigten C₁₋₆-Alkylgruppe, ist.

5. Phosphatverbindung gemäss irgendeinem der Ansprüche 1 bis 4, **dadurch gekennzeichnet, dass** n eine ganze Zahl zwischen 1 und 6 ist.

6. Phosphatverbindung gemäss irgendeinem der Ansprüche 1 bis 5, **dadurch gekennzeichnet, dass** Ar Phenyl oder C₁₋₄-Alkyl-substituiertes Phenyl ist.

7. Phosphatverbindung gemäss irgendeinem der Ansprüche 1 bis 6, **dadurch gekennzeichnet, dass** die Phosphatverbindung 2,4,8,10-Tetraoxaspiro[5.5]undecan-3,9-diyl-bis(2-methylolpropan)-2,1-diyltetraphenyl-bis(phosphat) oder ein Dimer oder ein Oligomer davon ist.

8. Verfahren zur Herstellung einer Phosphatverbindung gemäss irgendeinem der Ansprüche 1 bis 7, **dadurch gekennzeichnet, dass** die Phosphatverbindung erhalten wird, indem eine Rohmaterialzusammensetzung, umfassend zumindest ein Arylhalogenphosphat oder zumindest ein C₁₋₁₀-Alkyl-substituiertes Arylhalogenphosphat und zumindest ein 2,4,8,10-Tetraoxaspiro[5.5]undecan-3,9-dialkanol oder zumindest ein alkoxyliertes 2,4,8,10-Tetraoxaspiro[5.5]undecan-3,9-dialkanol, einer Phosphorylierungsreaktion unterzogen wird.

9. Verfahren gemäss Anspruch 8, **dadurch gekennzeichnet, dass** das Arylhalogenphosphat Diphenylchlorphosphat, Diphenylbromphosphat, Diphenyliodphosphat, Diphenylfluorphosphat, Phenyldichlorphosphat, Phenyldibromphosphat, Phenyldiiodphosphat und/oder Phenyldifluorphosphat und/oder eine C₁₋₁₀-Alkyl-substituierte Spezies davon ist.

10. Verfahren gemäss Anspruch 8 oder 9, **dadurch gekennzeichnet, dass** das 2,4,8,10-Tetraoxaspiro[5.5]-undecan-3,9-dialkanol 2,4,8,10-Tetraoxaspiro[5.5]-undecan-3,9-diethanol ist.

11. Verfahren gemäss irgendeinem der Ansprüche 8 bis 10, **dadurch gekennzeichnet, dass** die Phosphorylierungsreaktion bei einer Temperatur von 80 bis 120°C durchgeführt wird.

12. Verfahren gemäss irgendeinem der Ansprüche 8 bis 11, **dadurch gekennzeichnet, dass** die Phosphorylierungsreaktion in Gegenwart eines katalytischen Materials und gegebenenfalls eines Lösungsmittels durchgeführt wird.

13. Verfahren gemäss Anspruch 12, **dadurch gekennzeichnet, dass** das katalytische Material ein Metallhalogenid, ausgewählt aus der Gruppe bestehend aus Magnesiumchlorid, Aluminiumchlorid, Zinkchlorid, Titantetrachlorid, Eisenchlorid, Kupferchlorid und/oder Magnesiumbromid, ist.

14. Verfahren gemäss Anspruch 12, **dadurch gekennzeichnet, dass** das optionale Lösungsmittel Toluol, Hexan, Heptan oder eine Mischung davon ist.

15. Verfahren gemäss irgendeinem der Ansprüche 8 bis 14, **dadurch gekennzeichnet, dass** das Verfahren 2,4,8,10-Tetraoxaspiro[5.5]undecan-3,9-diyl-bis(2-methylolpropan)-2,1-diyltetraphenyl-bis(phosphat) und/oder ein Dimer und/oder ein Oligomer davon ergibt.

16. Verwendung einer Phosphatverbindung gemäss irgendeinem der Ansprüche 1 bis 7 als Flammschutzmittel in einer polymeren Zusammensetzung.

17. Verwendung gemäss Anspruch 16, wobei die Phosphatverbindung in einer Menge von 5 bis 30 Gew.% in der polymeren Zusammensetzung vorhanden ist.

## Revendications

1. Nouveau composé de phosphate
**caractérisé en ce que** ledit composé de phosphate a une formule générale de Formule (I) 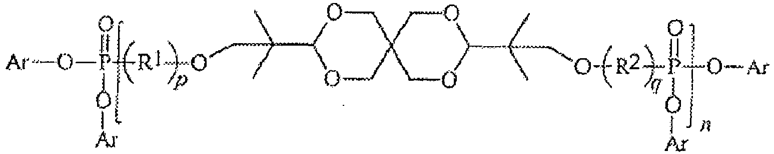 dans laquelle
- *n* est un entier et vaut au moins 1,
- p et *q* sont individuellement 0 ou un entier entre 1 et 10,
- R¹ et R² sont individuellement (i) un groupe alkyle divalent en C₁-C₆ linéaire ou ramifié, de manière facultative substitué par un cyclecycle aromatique, ou (ii) un groupe de formule -R³-O- dans lequel R³ est un groupe alkyle divalent en C₁-C₆, et
- Ar est un cycle aromatique, de manière facultative substitué par au moins un groupe alkyle en C₁-C₆ linéaire ou ramifié.

2. Composé de phosphate selon la revendication 1,
**caractérisé en ce que** R¹ et R² sont individuellement un groupe de formule -R³-O-dans lequel R³ est un groupe méthyle, éthyle, propyle ou butyle.

3. Composé de phosphate selon la revendication 1,
**caractérisé en ce que** p vaut 0 et *q* vaut 0.

4. Composé de phosphate selon la revendication 3,
**caractérisé en ce que** ledit composé de phosphate a une formule générale de Formule (II) 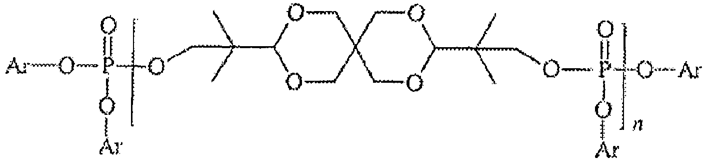 dans laquelle
- *n* est un entier et vaut au moins 1, et
- Ar est un cycle aromatique, de manière facultative substitué par au moins un groupe alkyle en C₁-C₆ linéaire ou ramifié.

5. Composé de phosphate selon l'une quelconque des revendications 1 à 4,
**caractérisé en ce que** n est un entier entre 1 et 6.

6. Composé de phosphate selon l'une quelconque des revendications 1 à 5,
**caractérisé en ce que** Ar est du phényle ou du phényle substitué par de l'alkyle en C₁-C₄.

7. Composé de phosphate selon l'une quelconque des revendications 1 à 6,
**caractérisé en ce que** ledit composé de phosphate est du 2,4,8,10-tétraoxaspiro[5.5]-undécane-3,9-diyle *bis*(2-méthylolpropane)-2,1-diyle tétraphényle *bis*(phosphate), ou est un dimère ou un oligomère de ce dernier.

8. Processus pour la production d'un composé de phosphate selon l'une quelconque des revendications 1 à 7,
**caractérisé en ce que** ledit composé de phosphate est obtenu en soumettant une composition de matière première comprenant au moins un halophosphate d'aryle ou au moins un halophosphate d'aryle substitué par un alkyle en C₁-C₁₀ et au moins un 2,4,8,10-tétraoxaspiro[5.5]-undécane-3,9-dialcanol ou au moins un 2,4,8,10-tétraoxaspiro[5.5]-undécane-3,9-dialcanol alcoxylé à une réaction de phosphorylation.

9. Processus selon la revendication 8,
**caractérisé en ce que** ledit halophosphate d'aryle est du chlorophosphate de diphényle, du bromophosphate de diphényle, de l'iodophosphate de diphényle, du fluorophoshate de diphényle, du dichlorophosphate de phényle, du dibromophosphate de phényle, du diiodophosphate de phényle et/ou du difluorophosphate de phényle et/ou des espèces de ceux-ci substituées par un alkyle en C₁-C₁₀.

10. Processus selon la revendication 8 ou 9,
**caractérisé en ce que** ledit 2,4,8,10-tétraoxaspiro[5,5]undécane-3,9-dialcanol est du 2,4,8,10-tétraoxaspiro[5.5]undécane-3,9-diéthanol.

11. Processus selon l'une quelconque des revendications 8 à 10,
**caractérisé en ce que** ladite réaction de phosphorylation est effectuée à une température de 80 à 120 °C.

12. Processus selon l'une quelconque des revendications 8 à 11,
**caractérisé en ce que** ladite réaction de phosphorylation est effectuée en présence d'une matière catalytique et de manière facultative d'un solvant.

13. Processus selon la revendication 12,
**caractérisé en ce que** ladite matière catalytique est un halogénure de métal sélectionné à partir du groupe constitué par du chlorure de magnésium, du chlorure d'aluminium, du chlorure de zinc, du tétrachlorure de titane, du chlorure de fer, du chlorure de cuivre et/ou du bromure de magnésium.

14. Processus selon la revendication 12,
**caractérisé en ce que** ledit solvant facultatif est du toluène, de l'hexane, de l'heptane ou un mélange de ceux-ci.

15. Processus selon l'une quelconque des revendications 8 à 14,
**caractérisé en ce que** ledit processus donne du 2,4,8,10-tétraoxaspiro[5.5]-undécane-3,9-diyle bis(2-méthylolpropane)-2,1-diyle tétraphényle *bis*(phosphate) et/ou un dimère et/ou un oligomère de ce dernier.

16. Utilisation d'un composé de phosphate selon l'une quelconque des revendications 1 à 7, en tant que retardateur de flammes dans une composition polymère.

17. Utilisation selon la revendication 16, dans laquelle ledit composé de phosphate est présent dans ladite composition polymère en une quantité de 5 à 30 % en poids.
